# EUROPÄISCHE PATENTANMELDUNG

(11) **EP 1 959 331 A1**
(43) Veröffentlichungstag der Anmeldung: **20.08.2008**
(21) Anmeldenummer: 07003299.0
(22) Anmeldetag: 16.02.2007
(51) Int. Cl.: G06F 1/32, G06K 19/077

(54) **Mikrosystem**

(71) Anmelder: Micronas GmbH, 79108 Freiburg i. Br. (DE)
(72) Erfinder: Lehmann, Mirko, Dr. rer. nat., 79117 Freiburg (DE)
(74) Vertreter: Huwer, Andreas

(57) **Zusammenfassung**

Ein Mikrosystem (1) besteht zumindest aus wenigstens einem Sensor (3) und/oder Aktuator, einer damit verbundenen Signalverarbeitungs- und/oder Ansteuereinrichtung (4), einem Zeitgeber (8) und einem elektrischen Energiespeicher (5) zur Stromversorgung zumindest der Signalverarbeitungs- und/oder Ansteuereinrichtung (4). Die Signalverarbeitungs- und/oder Ansteuereinrichtung (4) weist eine Betriebsartenumschalteinrichtung (6) auf, mittels der sie in einen Arbeitsmodus und einen Ruhemodus mit gegenüber dem Arbeitsmodus reduzierter Stromaufnahme bringbar ist. Die Betriebsartenumschalteinrichtung (6) hat mindestens einen Steuersignaleingang (7), der zum Anlegen eines Betriebsartenumschaltsignals mit dem Zeitgeber (8) elektrisch verbunden ist. Der Zeitgeber (8) ist ein mechanischer Zeitgeber (8), der mindestens einen mechanischen Energiespeicher aufweist, der derart mit wenigstens einem, mit dem mindestens einen Steuersignaleingang (7) der Signalverarbeitungs- und/oder Ansteuereinrichtung (4) verbundenen elektrischen Element (9) gekoppelt ist, dass dieses zeitabhängig verstellt wird.

## Beschreibung

Die Erfindung betrifft ein Mikrosystem, bestehend zumindest aus wenigstens einem Sensor und/oder Aktuator, einer damit verbundenen Signalverarbeitungs- und/oder Ansteuereinrichtung und einem elektrischen Energiespeicher zur Stromversorgung zumindest der Signalverarbeitungs- und/oder Ansteuereinrichtung, wobei die Signalverarbeitungs- und/oder Ansteuereinrichtung eine Betriebsartenumschalteinrichtung aufweist, mittels der sie in einen Arbeitsmodus und einen Ruhemodus mit gegenüber dem Arbeitsmodus reduzierter Stromaufnahme bringbar ist, und wobei die Betriebsartenumschalteinrichtung mindestens einen Steuersignaleingang zum Anlegen eines Betriebsartenumschaltsignals aufweist.

Ein derartiges Mikrosystem, das als Sensor einen Temperatursensor aufweist, ist aus der Praxis bekannt. Es kann an einem Gegenstand, wie z.B. einer Tiefkühlkost, angebracht werden, um deren Temperatur zu überwachen. Das Mikrosystem hat einen Halbleiterchip, in den eine Signalverarbeitungseinrichtung, ein Datenspeicher und ein elektronischer Zeitgeber integriert sind. Der Halbleiterchip ist mit einer Batterie verbunden, die als Stromversorgung dient. Die Signalverarbeitungseinrichtung weist eine Betriebsartenumschalteinrichtung auf, mittels der sie zwischen einem Arbeitsmodus und einem Ruhemodus umschaltbar ist. Im Arbeitsmodus wird ein Temperaturmesswert aus dem Temperatursensor in die Signalverarbeitungseinrichtung eingelesen und in dieser verarbeitet. Das Ergebnis der Signalverarbeitung wird im Datenspeicher abgelegt. Danach wird die Signalverarbeitungseinrichtung mittels der Betriebsartenumschalteinrichtung in den Ruhemodus umgeschaltet, in dem keine Signalverarbeitung erfolgt. Dadurch ist die Stromaufnahme im Ruhemodus geringer als im Arbeitsmodus. Die Umschaltung von dem Ruhemodus in den Arbeitsmodus, das so genannte Aufwecken der Signalverarbeitungseinrichtung, erfolgt durch ein Betriebsartenumschaltsignal, das von dem Zeitgeber erzeugt und an einen Steuersignaleingang der Betriebsartenumschalteinrichtung angelegt wird. Bei einem Mikrosystem, bei dem die Signalverarbeitungseinrichtung nur jeweils für eine kurze Zeitdauer im Arbeitsmodus und danach jeweils für eine wesentlich größere Zeitdauer im Ruhemodus betrieben wird, kann dadurch zwar der elektrische Energieverbrauch der Signalverarbeitungseinrichtung gegenüber einer ständig im Arbeitsmodus betrieben Signalverarbeitungseinrichtung deutlich reduziert werden. Da aber der Zeitgeber im Ruhemodus weiterhin betrieben werden muss und einen nicht unerheblichen Betriebsstrom aufweist, ermöglicht die Umschaltung vom Arbeits- in den Ruhemodus insgesamt nur eine begrenzte Stromeinsparung.

Es besteht deshalb die Aufgabe, ein Mikrosystem der eingangs genannten Art zu schaffen, das eine geringe Stromaufnahme und somit einen kompakten Energiespeicher ermöglicht.

Diese Aufgabe wird gelöst durch ein Mikrosystem, bestehend zumindest aus wenigstens einem Sensor und/oder Aktuator, einer damit verbundenen Signalverarbeitungs- und/oder Ansteuereinrichtung, einem Zeitgeber und einem elektrischen Energiespeicher zur Stromversorgung zumindest der Signalverarbeitungs- und/oder Ansteuereinrichtung, wobei die Signalverarbeitungs- und/oder Ansteuereinrichtung eine Betriebsartenumschalteinrichtung aufweist, mittels der sie in einen Arbeitsmodus und einen Ruhemodus mit gegenüber dem Arbeitsmodus reduzierter Stromaufnahme bringbar ist, wobei die Betriebsartenumschalteinrichtung mindestens einen Steuersignaleingang aufweist, der zum Anlegen eines Betriebsartenumschaltsignals mit dem Zeitgeber elektrisch verbunden ist, und wobei der Zeitgeber ein mechanischer Zeitgeber ist, der mindestens einen mechanischen Energiespeicher aufweist, der derart mit wenigstens einem, mit dem mindestens einen Steuersignaleingang der Signalverarbeitungs- und/oder Ansteuereinrichtung verbundenen elektrischen Element gekoppelt ist, dass dieses zeitabhängig verstellt wird.

In vorteilhafter Weise wird also die Energie für den Zeitgeber einem mechanischen Energiespeicher entnommen, so dass für den Betrieb des Zeitgebers keine elektrische Energie erforderlich ist. Die Stromaufnahme des Mikrosystems reduziert sich dadurch insbesondere im Ruhemodus erheblich. Der elektrische Energiespeicher des Mikrosystems können somit sehr kompakte Abmessungen aufweisen.

Bei einer bevorzugten Ausgestaltung der Erfindung ist der Energiespeicher ein Federspeicher. Dabei kann der Federspeicher insbesondere eine Spiralfeder und/oder eine Schraubenfeder aufweisen.

Bei einer vorteilhatften Ausführungsform der Erfindung steht der Federspeicher mit einem eine Unruh aufweisenden Uhrwerk in Antriebsverbindung. Dadurch ist es möglich, zwischen den einzelnen Phasen, in denen die Signalverarbeitungs- und/oder Ansteuereinrichtung im Arbeitsmodus betrieben wird, relativ lange Ruhephasen vorzusehen und dadurch den elektrischen Energieverbrauch der Signalverarbeitungs- und/oder Ansteuereinrichtung entsprechend zu reduzieren.

Zweckmäßigerweise ist das elektrische Element ein Schaltkontakt. Das Mikrosystem ist dann kostengünstig herstellbar.

Vorteilhaft ist, wenn der mindestens eine mechanische Energiespeicher ein Cantilever ist, der einen Kontaktarm aufweist, der an seinem einen Ende an einer Halterung fixiert und mit seinem anderen Ende durch eine abnehmende Haltekraft entgegen der Rückstellkraft seines Werkstoffs gegen einen Gegenkontakt positioniert ist. Die an dem Cantilever angreifende Haltekraft nimmt dabei langsam ab, bis sie schließlich kleiner ist als die Rückstellkraft des Cantilevers, so dass dieser nach Ablauf einer vorbestimmten Zeitdauer betätigt wird. Gegebenenfalls ist es sogar möglich, dass das Mikrosystem eine Vielzahl solcher Cantilever aufweist und dass die einzelnen Cantilever nach unterschiedlichen Zeitdauern betätigt werden, beispielsweise im Abstand von etwa einer Minute. Durch die Cantilever kann ein elektrischer Stromgreis geschlossen oder unterbrochen und/oder eine elektrische Kapazität derart verändert werden, dass die Kapazität ein Maß für die Zeit darstellt. In Abhängigkeit von dem Stromfluss in dem Stromkreis und/oder in Abhängigkeit von der Kapazität kann dann die Betriebsartenumschalteinrichtung zum Aktivieren des Arbeitsmodus betätigt werden.

Bei einer bevorzugten Ausgestaltung der Erfindung weisen mindestens zwei der Anordnungen, bestehend aus dem Cantilever und dem Gegenkontakt an der βerührungsstelle von Cantilever und Gegenkontakt eine unterschiedliche Oberflächentopologie auf Die Oberflächentopologien können dabei so gewählt sein, dass die einzelnen Cantilever nach unterschiedlichen Zeitdauern betätigt werden.

Vorteilhaft ist, wenn der Sensor und/oder Aktuator, die Signalverarbeitungs- und/oder Ansteuereinrichtung und der mechanischer Zeitgeber in einen Halbleiterchip integriert sind. Das Mikrosystem lässt sich dann mit Methoden der Halbleiterfertigung kostengünstig herstellen und ermöglicht außerdem kompakte Abmessungen.

Die Vorstehend genannte Aufgabe wird außerdem gelöst durch ein Mikrosystem, bestehend zumindest aus wenigstens einem Sensor und/oder Aktuator, einer damit verbundenen Signalverarbeitungs- und/oder Ansteuereinrichtung und einem elektrischen Energiespeicher zur Stromversorgung zumindest der Signalverarbeitungs- und/oder Ansteuereinrichtung, wobei die Signalverarbeitungs- und/oder Ansteuereinrichtung eine Betriebsartenumschalteinrichtung aufweist, mittels der sie in einen Arbeitsmodus und einen Ruhemodus mit gegenüber dem Arbeitsmodus reduzierter Stromaufnahme bringbar ist, wobei die Betriebsartenumschalteinrichtung mindestens einen Steuersignaleingang zum Anlegen eines βetriebsartenumschaltsignals aufweist, wobei an dem Steuersignaleingang ein Funkempfänger zum Empfangen eines von einem Zeitsignalsender ausgesendeten Zeitsignals angeschlossen ist, und wobei der Funkempfänger derart ausgestaltet ist, dass die für seinen Betrieb benötigte elektrische Energie aus dem Zeitsignal gewonnen wird.

In vorteilhafter Weise wird also die für den Betrieb des Zeitgebers benötigte elektrische Energie dem von dem externen Zeitsignalsender ausgesendeten Zeitsignal entnommen, so dass der zur Stromversorgung der Signalverarbeitungs- und/oder Ansteuereinrichtung vorgesehene Energiespeicher geschont wird. Der elektrische Energiespeicher des Mikrosystems kann somit sehr kompakte Abmessungen aufweisen und ermöglicht dennoch eine lange Betriebsdauer des Mikrosystems.

Nachfolgend sind Ausführungsbeispiele der Erfindung anhand der Zeichnung näher erläutert. Es zeigt:
- Fig. 1: eine schematische Darstellung eines einen Mikrocontroller aufweisenden Mikrosystems,
- Fig. 2: einen mechanischen Zeitgeber,
- Fig. 3: einen unprogrammierten Cantilever,
- Fig. 4: einen Cantilever während des Programmierens, und
- Fig.5: eine schematische Darstellung eines Mikrosystems, bei dem der Mikrocontroller durch ein Funksignal aufgeweckt werden kann.

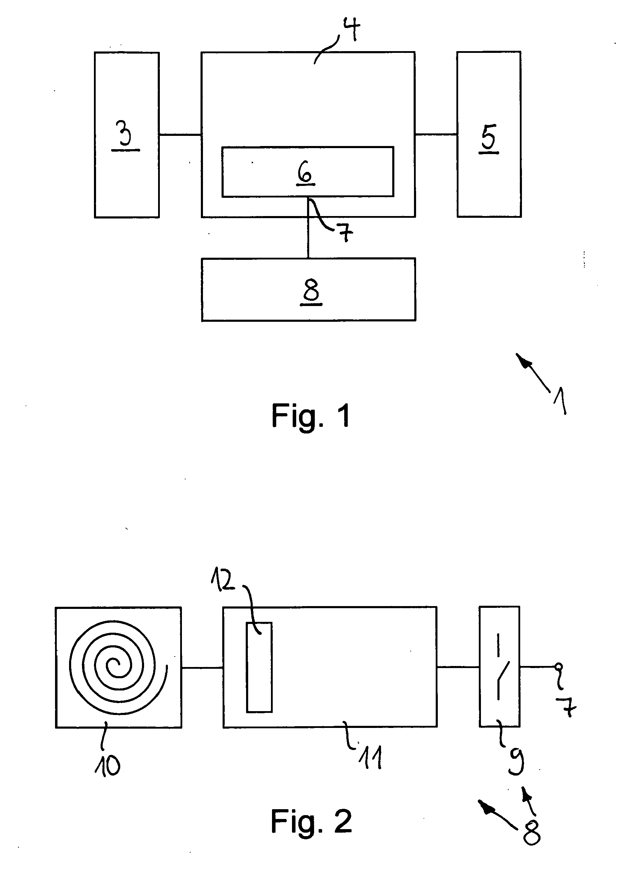

Ein in Fig. 1 im 6anzen mit 1 bezeichnetes Mikrosystem weist auf einem Halbleiterchip 2 einen Sensor 3 zur Erfassung einer physikalischen 6röße, wie z.B. der Temperatur und/oder der Luftfeuchtigkeit und eine mit dem Sensor 3 verbundene, als Mikrocontroller ausgestaltete Signalverarbeitungs- und/oder Ansteuereinrichtung 4 auf Stromversorgungsanschlüsse der Signalverarbeitungs- und/oder Ansteuereinrichtung 4 sind an einem elektrischen Energiespeicher 5, wie zum βeispiel einer Mikrobatterie oder einem Akku angeschlossen.

Die Signalverarbeitungs- und/oder Ansteuereinrichtung 4 hat eine Betriebsartenumschalteinrichtung 6, mittels der sie in einen Arbeitsmodus und einen Ruhemodus bringbar ist. Im Arbeitsmodus wird der Sensor 3 in Abhängigkeit von einem in der Signalverarbeitungs- und/oder Ansteuereinrichtung 4 ablaufenden Betriebsprogramm derart angesteuert, dass er an einem Messsignalausgang ein elektrisches Messsignal bereitstellt. Das Messsignal wird an einen Messsignaleingang der Signalverarbeitungs- und/oder Ansteuereinrichtung 4 angelegt und in der Signalverarbeitungs- und/oder Ansteuereinrichtung 4 verarbeitet. Die Signalverarbeitung kann beispielsweise eine Filteroperation und/oder eine Überprüfung des Messsignals auf Plausibilität umfassen. Ein durch die Signalverarbeitung erhaltener Messwert wird in einem Datenspeicher abgelegt, der in den Halbleiterchip 2 integriert ist.

Sobald ein Messwerterfassungszyklus durchlaufen ist, wird die Betriebsartenumschalteinrichtung 6 durch das Betriebsprogramm in den Ruhemodus umgeschaltet. Im Ruhemodus sind der Sensor 3 und Teile der Signalverarbeitungs- und/oder Ansteuereinrichtung 4 abgeschaltet, so dass die Signalverarbeitungs- und/oder Ansteuereinrichtung 4 dann nur eine sehr geringe Stromaufnahme aufweisen.

Die Messwerterfassung und -verarbeitung wird jeweils nach einer vorgegebenen Zeitdauer zyklisch wiederholt. Die βetriebsartenumschalteinrichtung 6 hat dazu einen Steuersignaleingang 7, der zum Anlegen eines βetriebsartenumschaltsignals mit einem verstellbaren elektrischen Element 9 verbunden ist. Das elektrische Element 9 wird durch einen mechanischen Zeitgeber 8 jeweils nach Ablauf der vorgegebenen Zeitdauer verstellt, um die Signalverarbeitungs- und/oder Ansteuereinrichtung 4 aufzuwecken. Bei dem in Fig. 2 gezeigten Ausführungsbeispiel ist das elektrische Element 9 ein Schaltkontakt, über den an den Steuersignaleingang 7 der Signalverarbeitungs- und/oder Ansteuereinrichtung 4 eine elektrische Spannung anlegbar ist.

Der Zeitgeber 8 hat einen Federspeicher 10, in dem eine vorgespannte mechanische Feder angeordnet ist. Die Feder treibt ein Uhrwerk 11 an, das eine Unruh 12 aufweist. In dem Zeitgeber 8 löst also ein mechanischer Vorgang einen elektrischen Effekt aus, der dazu verwendet wird, die Signalverarbeitungs- und/oder Ansteuereinrichtung 4 von dem Ruhemodus in den Arbeitsmodus umzuschalten.

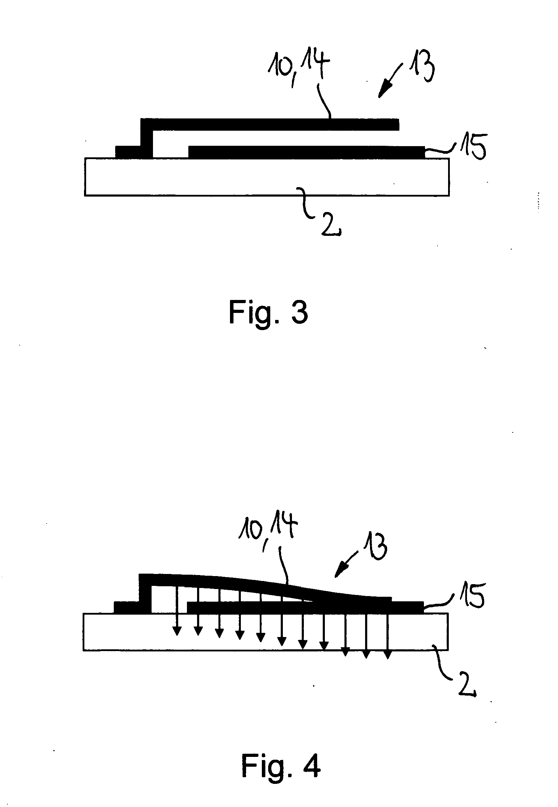

Bei dem in Fig. 3 und 4 gezeigten Ausführungsbeispiel weist der Zeitgeber 8 als mechanischen Energiespeicher 5 eine Vielzahl von Cantilevern 13 auf Jeder Cantilever 1 3 hat jeweils einen elastischen Kontaktarm 14, der an seinem einen Ende an dem Halbleiterchip 2 befestigt ist, beispielsweise über eine βondstelle. An ihrem von diesem Ende entfernten freien Ende sind die Cantilever 13 jeweils entgegen der Rückstellkra>fi ihres Werkstoffs durch eine Haltekraft gegen einen 6egenkontakt 15 positioniert. Die Haltekraft wird durch eine in der Zeichnung nicht näher dargestellte Oberflächenstrukturierung der aneinander anliegenden Oberflächenbereiche des Kontaktarms 14 und/oder des Gegenkontakt 15 erzeugt. Die Oberflächenstrukturierung ist derart gewählt, dass die Haltekraft langsam abnimmt. Sobald die Haltekraft geringer ist als die Rückstellkra>fi des Kontaktarms 14, entspannt sich der Kontaktarm 14 und verschwenkt aus der Schließstellung (Fig. 4) in die Offenstellung (Fig. 3). Das als elektrische Element 9 ist also durch den Kontaktarm 14 und den 6egenkontakt 15 gebildet.

Über die einzelnen Cantilever 13 ist jeweils eine elektrische Spannung an einen Steuersignaleingang 7 der Betriebsartenumschalteinrichtung 6 anlegbar. Bei jeder Änderung des an die Steuereingänge 7 angelegten Spannungsmusters wird die Signalverarbeitungs- und/oder Ansteuereinrichtung 4 aus dem Ruhemodus aufgeweckt, um einen Messwert zu erfassen und in dem Datenspeicher abzulegen.

Bei der Herstellung des Mikrosystems 1 werden die Cantilever 13 mit Hilfe einer Programmierspannung, die zwischen dem Kontaktarm 14 und dem 6egenkontakt 15 angelegt wird, aus der Offenstellung (Fig. 3) derart in die Schließstellung (Fig. 4) gebracht, dass sie nach dem anschließenden Entfernen der Programmierspannung für eine vorbestimmte Zeitdauer in der Schließstellung verbleiben und sich danach selbständig in die Offenstellung verstellen. Die Programmierspannung wird so hoch eingestellt, dass die Kraft, die durch das zwischen dem Kontaktarm 14 und dem Gegenkontakt 15 befindliche, in Fig. 4 durch Pfeile dargestellte elektrische Feld auf den Kontaktarm 14 bzw. den Gegenkontakt 15 ausgeübt wird, größer ist als die Rückstellkratf des Kontaktarms 14.

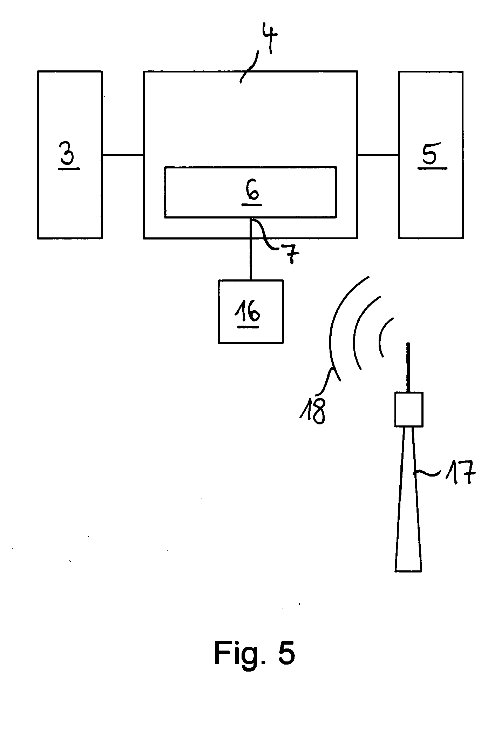

Bei dem in Fig. 5 gezeigten Ausführungsbeispiel ist an dem Steuersignaleingang der Betriebsartenumschalteinrichtung 6 ein Funkempfänger 16 zum Empfangen eines von einem Zeitsignalsender 17 ausgesendeten Zeitsignals 18 angeschlossen ist. Der Funkempfänger 16 ist derart ausgestaltet ist, dass die für seinen Betrieb benötigte elektrische Energie aus dem Funk- bzw. Zeitsignal 18 gewonnen wird. Bei Empfangen eines Zeitsignals 18 wird die Signalverarbeitungs- und/oder Ansteuereinrichtung durch Anlegen eines entsprechenden elektrischen Signals an den Steuersignaleingang 7 aus dem Ruhemodus in den Arbeitsmodus umgeschaltet.

## Patentansprüche

1. Mikrosystem (1), bestehend zumindest aus wenigstens einem Sensor (3) und/oder Aktuator, einer damit verbundenen Signalverarbeitungs- und/oder Ansteuereinrichtung (4), einem Zeitgeber (8) und einem elektrischen Energiespeicher (5) zur Stromversorgung zumindest der Signalverarbeitungs- und/oder Ansteuereinrichtung (4), wobei die Signalverarbeitungs- und/oder Ansteuereinrichtung (4) eine Betriebsartenumschalteinrichtung (6) aufweist mittels der sie in einen Arbeitsmodus und einen Ruhemodus mit gegenüber dem Arbeitsmodus reduzierter Stromaufnahme bringbar ist, und wobei die Betriebsartenumschalteinrichtung (6) mindestens einen Steuersignaleingang (7) aufweist, der zum Anlegen eines Betriebsartenumschaltsignals mit dem Zeitgeber (8) elektrisch verbunden ist, **dadurch gekennzeichnet dass** der Zeitgeber (8) ein mechanischer Zeitgeber (8) ist, der mindestens einen mechanischen Energiespeicher aufweist, der derart mit wenigstens einem, mit dem mindestens einen Steuersignaleingang (7) der Signalverarbeitungs- und/oder Ansteuereinrichtung (4) verbundenen elektrischen Element (9) gekoppelt ist, dass dieses zeitabhängig verstellt wird.

2. Mikrosystem (1) nach Anspruch 1, **dadurch gekennzeichnet, dass** der mechanische Energiespeicher ein Federspeicher (10) ist.

3. Mikrosystem (1) nach Anspruch 1 oder 2, **dadurch gekennzeichnet, dass** der Federspeicher (10) mit einem eine Unruh (12) aufweisenden Uhrwerk (11) in Antriebsverbindung steht.

4. Mikrosystem (1) nach einem der Ansprüche 1 bis 3, **dadurch gekennzeichnet, dass** das elektrische Element (9) ein Schaltkontakt ist.

5. Mikrosystem (1) nach einem der Ansprüche 1 bis 4, **dadurch gekennzeichnet, dass** der mindestens eine mechanische Energiespeicher ein Cantilever (13) ist, der einen Kontaktarm (14) aufweist, der an seinem einen Ende an einer Halterung fixiert und mit seinem anderen Ende durch eine abnehmende Haltekraft entgegen der Rückstellkraft seines Werkstoffs gegen einen Gegenkontakt (15) positioniert ist.

6. Mikrosystem (1) nach einem der Ansprüche 1 bis 5, **dadurch gekennzeichnet, dass** mindestens zwei der Anordnungen, bestehend aus dem Cantilever (13) und dem Gegenkontakt (15) an der Berührungsstelle von Cantilever (13) und Gegenkontakt (15) eine unterschiedliche Oberflächentopologie aufweisen.

7. Mikrosystem (1) nach einem der Ansprüche 1 bis 6, **dadurch gekennzeichnet, dass** der Sensor (3) und/oder Aktuator, die Signalverarbeitungs- und/oder Ansteuereinrichtung (4) und der mechanischer Zeitgeber (8) in einen Halbleiterchip (2) integriert sind.

8. Mikrosystem (1), bestehend zumindest aus wenigstens einem Sensor (3) und/oder Aktuator, einer damit verbundenen Signalverarbeitungs- und/oder Ansteuereinrichtung (4) und einem elektrischen Energiespeicher (5) zur Stromversorgung zumindest der Signalverarbeitungs- und/oder Ansteuereinrichtung (4), wobei die Signalverarbeitungs- und/oder Ansteuereinrichtung (4) eine Betriebsartenumschalteinrichtung (6) aufweist, mittels der sie in einen Arbeitsmodus und einen Ruhemodus mit gegenüber dem Arbeitsmodus-reduzierter Stromaufnahme bringbar ist, und wobei die Betriebsartenumschalteinrichtung (6) mindestens einen Steuersignaleingang (7) zum Anlegen eines Betriebsartenumschaltsignals aufweist, **dadurch gekennzeichnet, dass** an dem Steuersignaleingang (7) ein Funkempfänger (16) zum Empfangen eines von einem Zeitsignalsender (17) ausgesendeten Zeitsignals (18) angeschlossen ist, und dass der Funkempfänger (16) derart ausgestaltet ist, dass die für seinen Betrieb benötigte elektrische Energie aus dem Zeitsignal (18) gewonnen wird.
